Europäisches Patentamt

European Patent Office

Office européen des brevets

(19)

(11) Veröffentlichungsnummer: **0 124 138**
**B1**

(12) **EUROPÄISCHE PATENTSCHRIFT**

(45) Veröffentlichungstag der Patentschrift:
**26.10.88**

(51) Int. Cl.⁴: **B 02 C  18/14,** B 02 C  18/16

(21) Anmeldenummer: **84105000.8**

(22) Anmeldetag: **03.05.84**

(54) **Verfahren und Vorrichtung zur Zerkleinerung von Pflanzengut.**

(30) Priorität: **03.05.83  DE 3316142**

(43) Veröffentlichungstag der Anmeldung:
**07.11.84 Patentblatt 84/45**

(45) Bekanntmachung des Hinweises auf die Patenterteilung:
**26.10.88 Patentblatt 88/43**

(84) Benannte Vertragsstaaten:
**AT BE CH DE FR GB IT LI LU NL SE**

(56) Entgegenhaltungen:
**AU - B - 522 081**
**DE - B - 1 178 246**
**DE - C - 307 391**
**DE - C - 611 387**
**DE - C - 641 018**
**FR - A - 2 074 246**
**GB - A - 12 945**
**GB - A - 655 695**

(73) Patentinhaber: **Kalverkamp, Klemens, Possenbrock 29,**
**D-4730 Ahlen/Westfalen (DE)**

(72) Erfinder: **Kalverkamp, Klemens, Possenbrock 29,**
**D-4730 Ahlen/Westfalen (DE)**

(74) Vertreter: **Habbel, Hans-Georg, Dipl.-Ing.,**
**Postfach 3429 Am Kanonengraben 11, D-4400 Münster**
**(DE)**

**Beschreibung**

Die Erfindung bezieht sich auf eine Vorrichtung zum Zerkleinern von Pflanzengut gemäss dem Oberbegriff des Patentanspruches 1.

Corn Cop Mix enthält vor der eigentlichen Reife geernteten, gemahlenen und/oder geschroteten Mais, dessen Kolben und Pflanzensubstanz als Ganzes zerkleinert wird. Hierbei handelt es sich um ein im zerkleinerten Zustand zähes, zur Klumpenbildung neigendes Gut, welches in Folge seiner hohen Feuchtigkeits- und Eiweissgehalte eine klebrige Masse bildet, die bei der maschinellen Zerkleinerung grosse Schwierigkeiten bereitet. Für die Mischung aber ist es von Bedeutung, eine vollkommene Homogenität zu erreichen. Aus diesem Grunde muss das Pflanzengut sehr fein zerkleinert werden.

Aus der DE-B-1 178 246 ist es bekannt, zur Zerkleinerung von Pflanzengut schnellaufende Mühlen mit Bodenrost zu verwenden. Wegen der zu Verklebungen und Anbackungen neigenden Eigenschaften des Pflanzengutes, ergeben sich hierbei beachtliche Schwierigkeiten. Ein besonderer Nachteil der bisher verwendeten Zerkleinerungsvorrichtungen ergibt sich durch Verkleben bzw. Zusetzen der Siebe oder Bodenroste. Hierdurch wird der ohnehin sehr hohe Kraftbedarf der Mühlen bei schlechterwerdender Zerkleinerungsleistung weiter erhöht. Der Kraftbedarf steigt weiterhin progressiv an, wenn die Schlagkanten der Zerkleinerungselemente aufgrund des Verschleisses stumpf werden.

Eine gattungsbildende Vorrichtung wird in der GB-A-655 695 beschrieben. Bei dieser bekannten Einrichtung arbeiten umlaufende und feststehende Messer zusammen und das in die Zerkleinerungsvorrichtung eingegebene Gut wird durch die Transportbewegung der bewegten Messer wieder aus der Zerkleinerungsvorrichtung ausgetragen. Die Messer sind dabei relativ breit ausgebildet und wirken als Schlagleisten und der Abstand zwischen den feststehenden Messern und den bewegten Messern ist relativ gross, so dass keine Feinzerkleinerung erzielt wird, sondern ein grob gehäckseltes Gut, das nicht geeignet ist, als Corn Cob Mix an Futterempfänger weitergeliefert zu werden.

Der Erfindung liegt die Aufgabe zugrunde, die gattungsbildende Einrichtung dahingehend zu verbessern, dass eine Zerkleinerungsvorrichtung geschaffen wird, die das Pflanzengut mit erheblich verringerter Antriebsleistung und ohne Beeinträchtigung durch die klumpenden und klebenden Eigenschaften des Pflanzengutes in gewünschtem Masse zerkleinert, ein feinzerkleinertes Gut schafft, wobei aber die Schnittleistung und Kraftbedarf der Vorrichtung auch für längere Betriebszeiten ohne nachteilige Veränderungen verfügbar sein soll.

Diese der Erfindung zugrundeliegende Aufgabe wird durch die Lehre des Patentanspruches 1 gelöst.

Vorteilhafte Ausgestaltung sind in den Unteransprüchen erläutert.

Eine besonders sinnvolle Arbeitsweise der erfindungsgemässen Vorrichtung wird in dem Verfahrensanspruch 16 beschrieben.

Mit anderen Worten ausgedrückt, wird durch die erfindungsgemässe Vorrichtung das Pflanzengut zwischen einer Vielzahl sich auf einer Kreisbahn bewegenden inneren Schneiden hoher Geschwindigkeit ungleichförmig beschleunigt und vorzerkleinert und von einer Vielzahl äusserer feststehender Schneiden fertigzerkleinert. Das zu zerkleinernde Pflanzengut wird durch, vorzugsweise auf einem Kreisbogen bewegten Schneiden zunächst unter Gegenhaltung durch eine Wand vorzerkleinert und beschleunigt, bis es in einem Labyrinth von gegeneinander bewegten Schneiden fertigzerkleinert wird. Die scherende Beanspruchungsart, die die Schneiden auf das Pflanzengut ausüben, führt zu einem sehr homogenen Zerkleinerungsergebnis bei geringem Energieaufwand. Durch das Zusammenwirken bewegter und feststehender Messer ergibt sich ein reiner Schneidvorgang, der durch klebende und klumpende Eigenschaften des Gutes nicht beeinträchtigt wird. Die relativ dünnen Messer können aus vergütetem Stahlblech hergestellt werden, z.B. durch Ausstanzen, und sind somit in grosser Stückzahl mit relativ geringen Kosten herstellbar. Als besonders vorteilhaft stellt sich heraus, dass diese Art der Messer ohne jede Nachbehandlung die benötigten Schneidkanten besitzen und somit im Betrieb hervorragende Stanzzeiten ergeben. Die dünnen Messer werden im Betrieb nicht stumpf und sind selbstschärfend, da ihre Dicke einer Anschliffkante entspricht.

Die Erfindung wird in Zeichnungen in einer bevorzugten Ausführungsform gezeigt, wobei aus den Zeichnungen weitere vorteilhafte Einzelheiten der Erfindung entnehmbar sind.

Die Zeichnungen zeigen im einzelnen:

Fig. 1 eine Vorrichtung in Seitenansicht, teils im Schnitt, in schematisierter Darstellung,

Fig. 2 eine Vorrichtung gemäss Fig. 1 im Schnitt entsprechend einer zur Seitenansicht senkrechten Ebene gemäss Schnittlinie I–I in Fig. 1,

Fig. 3 ein gezahntes Kreissegment als Seitenansicht,

Fig. 4 einen Schnitt durch einen Teil des Rotors sowie der zugeordneten Gehäusewand gemäss Schnittlinie IV–IV in Fig. 1, mit auf Abstand stehenden Messern,

Fig. 5 einen Schnitt durch einen Teil des Rotors sowie der zugeordneten Gehäusewand gemäss Schnittlinie IV–IV in Fig. 1, mit sich überdeckenden Messern,

Fig. 6 eine Vorrichtung in Seitenansicht, teils im Schnitt, in schematisierter Darstellung, mit Einzelmessern,

Fig. 7 eine Vorrichtung gemäss Fig. 6 im Schnitt entsprechend einer zur Seitenansicht senkrechten Ebene gemäss Schnittlinie II–II in Fig. 6,

Fig. 8 einen Schnitt durch einen Teil des Rotors und

Fig. 9 eine Zusammenstellung der Messer in Seitenansicht aus einer Vorrichtung gemäss Fig. 6.

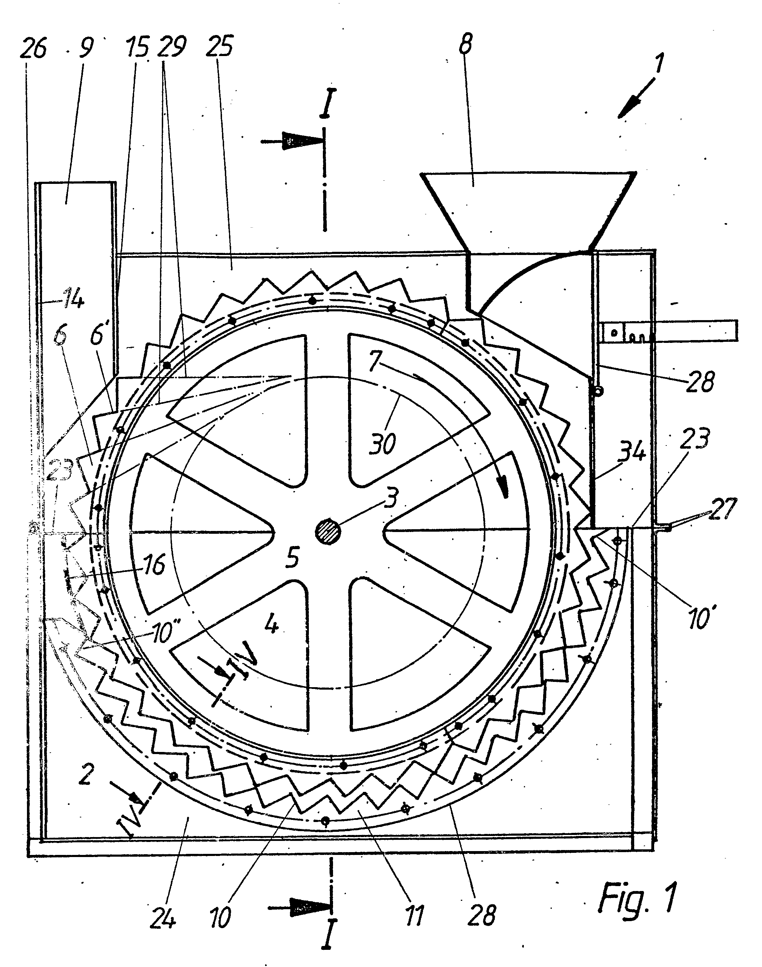

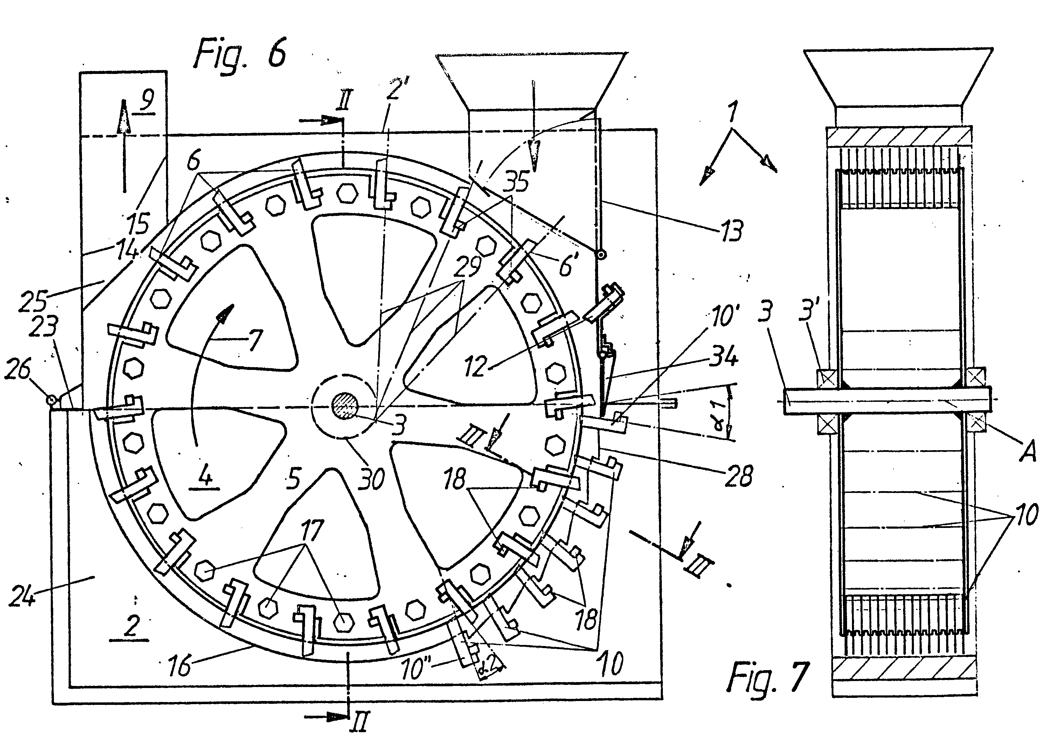

Die Vorrichtung 1 gemäss Fig. 1 und als Variante gemäss Fig. 6 umfasst ein Gehäuse 2, in welchem eine Welle 3 in Lagern 3' mit horizontaler Rotationsachse A gelagert ist. Die Welle 3 steht mit einem nicht dargestellten Antrieb in Verbindung. Weiter umfasst die Vorrichtung einen Rotor 4, der mittels Speichenrädern 5 konzentrisch um die Welle 3 angeordnet und drehschlüssig mit dieser verbunden ist. An seinem Umfang ist der Rotor 4 mit Messern 6 bestückt, die in der Folge als bewegte Messer 6 bezeichnet werden. Diese bewegen sich mit dem Rotor 4 in Drehrichtung gemäss Pfeil 7.

Den Messern 6 entgegengerichtet sind im Bereich einer gemäss Fig. 1 rechtsseitigen Innenwand 28 des Gehäuses 2 über den Bereich der vertikalen Projektion eines Einfüllschachtes 8 hinaus halbkreisförmig feststehende Messer 11 angeordnet. Im vertikalen Wandbereich erfolgt oberhalb der feststehenden Messer 11 durch die Messer 6 im sich verengenden Spalt eine Vorzerkleinerung, ggf. unter Mitwirkung weiterer feststehender Messer 12 (Fig. 6). Diese dienen der Vorzerkleinerung gröberen Gutes, bevor dieses in den eigentlichen Schnittbereich der Messer 6 im Zusammenwirken mit den feststehenden Messern 11 gelangt. Diese Vorzerkleinerung ist vorteilhaft, weil dadurch eine gleichmässige und stossfreie Zerkleinerung des vorzerkleinerten Gutes zwischen den Messerpaketen erfolgen kann.

Die feststehenden Messer 11 sind ebenso wie die bewegten Messer 6 in zur Rotationsachse A parallelen Reihen 10, 10', 10'' angeordnet. Die Anfangsreihe ist mit 10' bezeichnet. Die Endreihe ist mit 10'' bezeichnet. Von dort setzt sich in Drehrichtung 7 eine innere Gehäusewand 16 fort, welche in gleichem Radius-Abstand zur Rotationsachse A und in geringem Abstand zu einem vom äusseren Durchmesser der Messer 6 beschriebenen imaginären Kreis verläuft. Diese Wandfläche 16 geht tangential in den, durch Wandbereich 14 zusammen mit dem gegenüberliegenden Wandbereich 15 gebildeten Auswurfschacht 9 über.

Für eine optimale Schneidwirkung ist die Stellung der beweglichen Messer 6 und der feststehenden Messer 11 zueinander von Bedeutung. Dabei sind die bewegten Messer 6 in Bewegungsrichtung 7 derart rückwärts geneigt, dass ihre Schneidkanten 6' tangentiale Linien 29 an einen zur Rotationsachse A konzentrischen, imaginären Kreis 30 bilden.

Die Schneidkanten der feststehenden Messer 11 bilden mit den Schneidkanten 6' der bewegten Messer 6 Winkel in Fig. 6 zwischen $\alpha_1$ mit etwa 30° und $\alpha_2$ mit etwa 7° bilden.

Damit ergibt sich ein Zusammenwirken dieser Schneidkanten zu einer Schneidfunktion wie bei einer Schere.

Hieraus ergeben sich Vorteile sowohl für die Schneidwirkung selbst, als auch für die Standzeiten der Schneiden. Sie haben zur Folge, dass der Leistungsbedarf der Vorrichtung bezogen auf gleiche Zerkleinerungsqualität und -menge den beim Stand der Technik verwendeten Vorrichtungen um ein Vielfaches überlegen ist.

Bei der in Fig. 1 und 6 in Seitenansicht sowie in rein schematischer Darstellung gezeigten Vorrichtungen ist der Auswurfschaft 9 mit vertikaler Achse angeordnet. Er kann jedoch auch in zweckmässiger Abwandlung mit einer Neigung im spitzen Winkel nach auswärts gegenüber der Vertikalen angeordnet sein.

Ferner ist das Gehäuse 2 an einer horizontalen Trennebene 23 in einen unteren Gehäusebereich 24 und einen oberen Gehäusebereich 25 geteilt. Diese sind durch ein Scharnier 26 miteinander schwenkbeweglich verbunden und mit Flanschen 27 ringsum gegeneinander abdichtend gehalten. Nach Lösen einigr (nicht dargestellter) Schrauben kann beispielsweise zu Reinigungs- und/oder Revisionszwecken der obere Gehäusebereich 25 aufgeklappt oder eine nicht gezeichnete Revisionsklappe unterhalb des Gehäuses geöffnet werden. Dabei liegt dann das Innere der Vorrichtung 1 grösstenteils frei und kann nachgesehen werden.

Ausserdem wird in Fig. 6 eine Sicherungsklappe 34 gezeigt, die sich in dem zum Rotor tangentialen Wandbereich des Einfüllschachtes, z.B. bei versehentlich eingeführten Steinen, gegen eine federnde Rückstellkraft öffnet und so den Schneidapparat vor Überlastung schützt.

Eine weitere Klappe 13, die ebenfalls im Bereich des Einfüllschachtes angeordnet ist, erlaubt es, wenn der Schneidapparat verstopft ist, nach manuellem Einklappen in den Schacht, mechanisch zugeführtes Pflanzengut an dem Schneidapparat vorbei zu leiten.

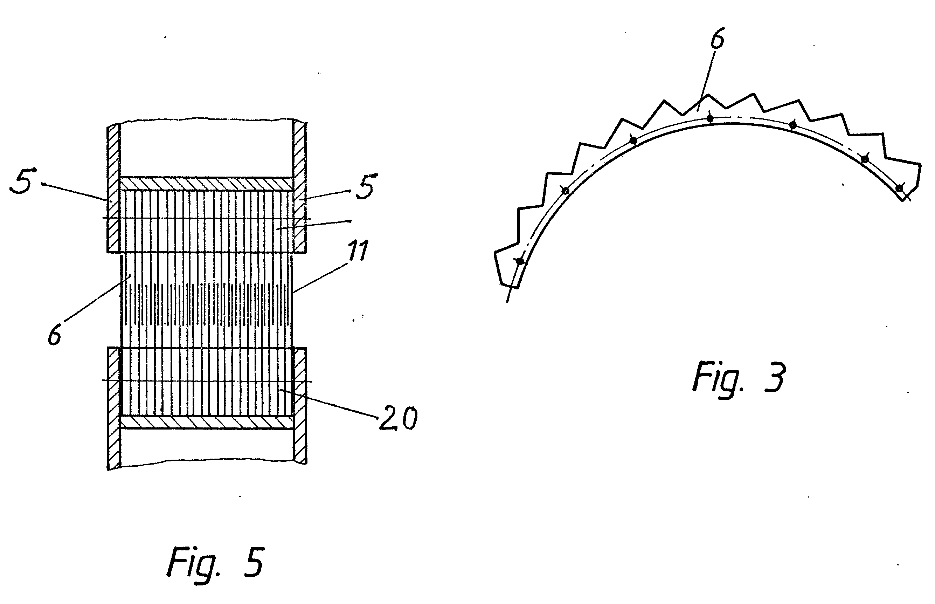

Aus der Darstellung ist ferner die Bauart des Rotors 4 erkennbar, der zwei von der Welle 3 zehntriert aufgenommene Speichenräder 5 umfasst, zwischen denen Distanzscheiben 20 (Fig. 5) angeordnet sind. Die bewegten Messer 6 sind fest zwischen den Speichenrädern 5 und Distanzscheiben 20 gespannt.

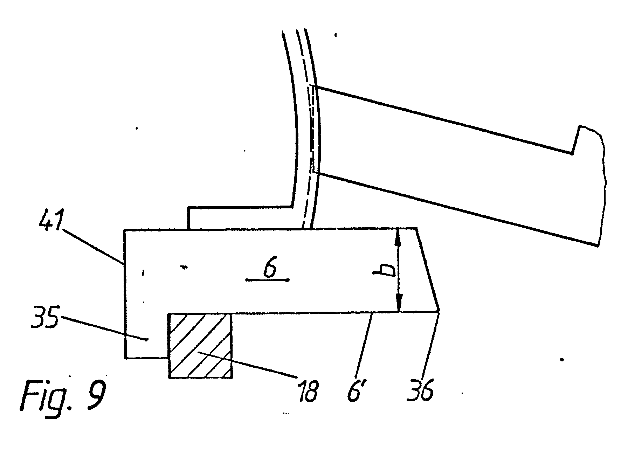

Zur Sicherung der Position sind bei einer Ausführung mit Einzelmessern Sicherungsleisten 18 durch entsprechende Ausnehmungen in den peripheren Bereichen des Rotors 4 eingeschoben, die Vorsprünge 35 (s. Fig. 9) hintergreifen und auf diese Weise die Messer 6 sicher halten.

Vorteilhaft lassen sich aber auch mehrere Einzelmesser zu gezahnten Kreisbogensegmenten zusammenfassen, das beispielhaft in Fig. 3 gezeigt ist.

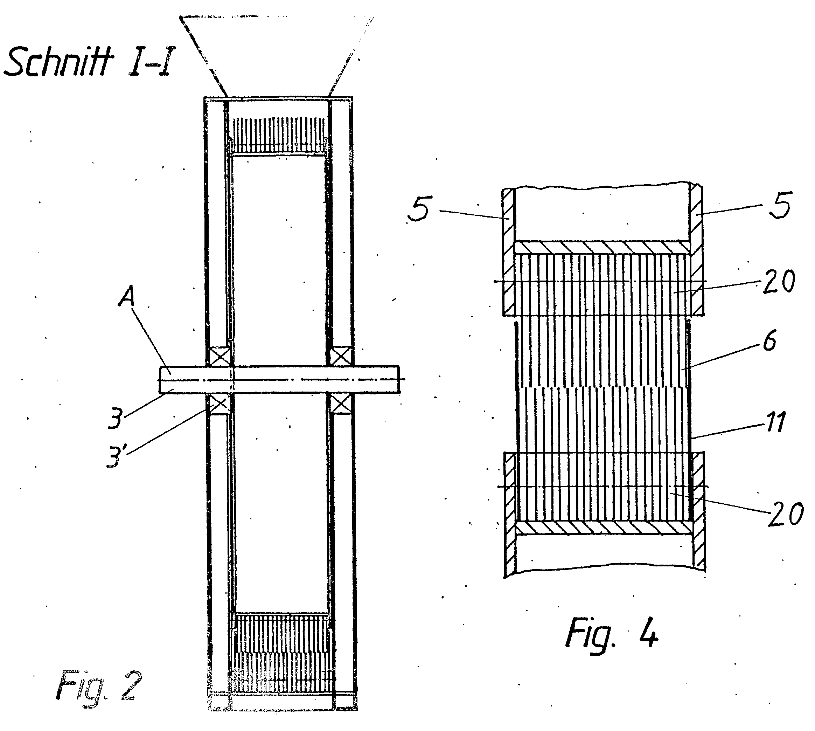

Einen Schnitt entsprechend der Schnittebene I–I in Fig. 1 zeigt Fig. 2, während Fig. 7 einen gleichgearteten Schnitt entsprechend Linie II–II in Fig. 6 zeigt. Darin sind gleiche Elemente mit gleichen Bezugszeichen kenntlich gemacht. Die Darstellungen, Fig. 2 und Fig. 7, welche lediglich zur Veranschaulichung der Breitenverhältnisse der Vorrichtung 1 dienen, bedürfen im übrigen keiner weiteren Erläuterung. Der in Fig. 1 und Fig. 6 von der Seite und in Fig. 2 und Fig. 7 von der Schmalseite gezeigte Rotor 4 hat bei einem praktischen Ausführungsbeispiel einen Durchmesser von 120 cm von Messerspitze zu Messerspitze und eine Breite von 25 cm. Als Antrieb dient ein Motor von 40 KW, die Umfangsgeschwindigkeit der bewegten Messer 6 beträgt 85 m/sec.

Verschiedene vorteilhafte Anordnungen der an der Peripherie des Rotors 4 eingespannten Messer 6 zeigen in anschaulicher Weise Fig. 4 und 5. Aus den Darstellungen ist auch die Anordnung der Gegenmesser 11 erkennbar. Es handelt sich bei dieser Darstellung um einen Schnitt entsprechend der Schnittlinie IV–IV in Fig. 1.

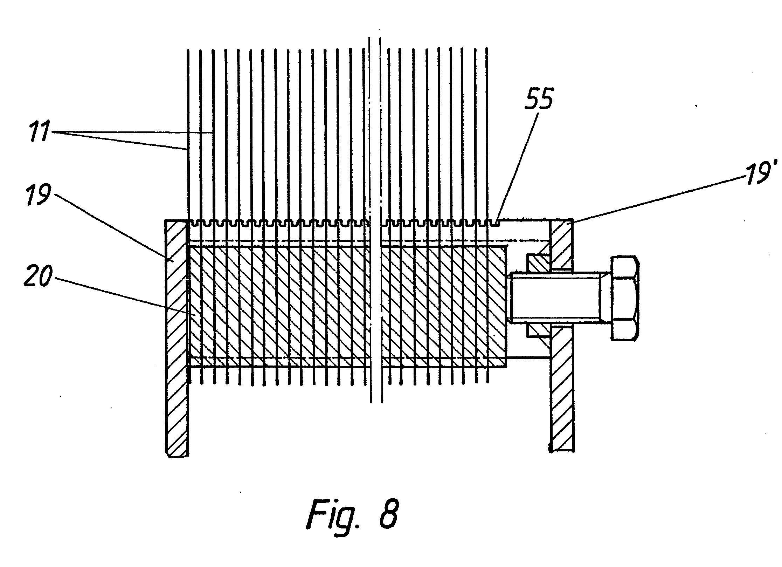

In Fig. 8 sind von der Vorrichtung 1 äussere Seitenwände 19, 19' des Gehäuses 2 zu erkennen. Der gezeigte Gehäusebereich ist ähnlich dem Rotor 4 mit Distanzscheiben 20 ausgestattet, welche mittels Schrauben zusammengespannt sind.

Zwischen den Distanzscheiben sind die feststehenden Messer 11 eingespannt. Aus der Darstellung ist ferner erkennbar, dass die Gegenmesser bei einer kammartigen Anordnung der feststehenden Messer 11 und der bewegten Messer 6 vorteilhaft in Rillen 55 geführt werden. So wird ein Berühren der Messer sicher vermieden.

Fig. 9 zeigt Form und Abmessungen eines Messers 6, das als Einzelmesser ausgebildet ist, in etwa natürlicher Grösse. Dagegen zeigt Fig. 3 ein gezahntes Kreisbogensegment, bei dem mehrere Einzelmesser zu einem Stanzteil zusammengefasst sind.

Die Messer sind als Stanzteil aus 0,8 mm vergütetem z.B. kaltverfestigtem Stahlblech in einem Arbeitsgang ohne Nachbearbeitung hergestellt. Weil die Messer vom Grundmaterial her eine Dicke aufweisen, die einer Anschliffkante bei Messern für landwirtschaftliche Maschinen entspricht, können sie auch im rauhen Betrieb niemals stumpf werden. Die Abmessungen eines Einzelmessers aus Fig. 9 betragen von einer Hinterkante 41 bis zur Messerspitze 36 beispielsweise ca. 100 mm, die Breite «b» z.B. 25 mm, die Dicke 0,8 mm. Der Vorsprung 35 wird im eingebauten Zustand von der Sicherungsleiste 18 hintergriffen und sichert das Messer 6 bzw. 11 in seiner eingespannten Lage.

**Patentansprüche**

1. Vorrichtung zum Zerkleinern von Pflanzengut, insbesondere feuchtem Pflanzengut, z.B. zur Erzeugung von Corn Cob Mix, umfassend ein Gehäuse (2) und einen darin drehbeweglich gelagerten, mit einem Antrieb versehenen Rotor (4) sowie mit bewegten und feststehenden, miteinander zusammenwirkenden, gegenüber der Rotorwelle (3) radial ausgerichteten Messern (6, 11), wobei die bewegten Messer (6) an Aussenflächen des Rotors (4) und die feststehenden Messer (11) an Innenflächen des Gehäuses (2) angeordnet sind, dadurch gekennzeichnet, dass die Messer (6, 11) eine Dicke von 0,3 bis 3 mm, vorzugsweise 0,5 bis 1 mm besitzen, der Zwischenraum zwischen jeweils zwei bewegten Messern (6) oder feststehenden Messern (11) einer Reihe (10, 10') dem doppelten bis annähernd dem vierfachen der Dicke eines Messers entspricht und die bewegten Messer (6) und die feststehenden Messer (11) in zum Rotor (4) achsparallelen Reihen (10, 10') nebeneinander sowie in zu mehreren zueinander parallelen Reihen (10, 10') paketweise angeordnet sind.

2. Vorrichtung nach Anspruch 1, dadurch gekennzeichnet, dass die bewegten Messer (6) in Bewegungsrichtung (7) des Rotors (4) rückwärts geneigt sind, wobei ihre Schneiden (6') tangentiale Linien (29) an einen zur Rotationsachse (A) konzentrisch gedachten Kreis (30) bilden.

3. Vorrichtung nach Anspruch 1 oder 2, dadurch gekennzeichnet, dass die Schneiden (6') der bewegten (6) und der feststehenden Messer (11) in einer scherenförmigen Winkelstellung zueinander angeordnet sind, wobei der Winkel zwischen 5° und 30°, vorzugsweise zwischen 7° und 15° beträgt.

4. Vorrichtung nach einem oder mehreren der Ansprüche 1 bis 3, dadurch gekennzeichnet, dass die Messer (6, 11) aus vergütetem Stahlblech, vorzugsweise durch Ausstanzen, hergestellte Formteile sind.

5. Vorrichtung nach einem oder mehreren der Ansprüche 1 bis 4, dadurch gekennzeichnet, dass die Messer (6, 11) die Form eines länglichen Rechteckes mit einem am Befestigungsende (41) vorzugsweise rechteckigen Vorsprung (35) aufweisen.

6. Vorrichtung nach einem oder mehreren der Ansprüche 1 bis 5, dadurch gekennzeichnet, dass Form und Abmessungen der bewegten (6) und der feststehenden Messer (11) gleich sind.

7. Vorrichtung nach einem oder mehreren der Ansprüche 1 bis 6, dadurch gekennzeichnet, dass der Körper des Rotors (4) Distanzscheiben (20) besitzt, die zwischen tragenden Speicherrädern (5) des Rotors (4) zusammengespannt sind und dass die Messer (6) zwischen Flächen der Distanzscheiben (20) eingespannt sind.

8. Vorrichtung nach einem oder mehreren der Ansprüche 1 bis 7, dadurch gekennzeichnet, dass die Messer (6) in radialer Richtung durch zur Welle (3) achsparallele, die hinteren Vorsprünge (35) der Messer (6) hintergreifende, Sicherungs-Leisten (18) gesichert sind.

9. Vorrichtung nach einem oder mehreren der Ansprüche 1 bis 8, dadurch gekennzeichnet, dass der Rotor (4) einen Durchmesser von 50 cm bis 150 cm, vorzugsweise von 80 cm bis 120 cm, aufweist.

10. Vorrichtung nach einem oder mehreren der Ansprüche 1 bis 9, dadurch gekennzeichnet, dass der Rotor (4) eine Breite von 10 cm bis 50 cm, vorzugsweise 20 cm bis 30 cm, aufweist.

11. Vorrichtung nach einem oder mehreren der Ansprüche 1 bis 10, dadurch gekennzeichnet, dass an der Oberseite (2') des Gehäuses (2) ein Einfüllschacht (8) vorgesehen ist, der vorzugsweise einen rechteckigen Querschnitt aufweist.

12. Vorrichtung nach einem oder mehreren der Ansprüche 1 bis 11, dadurch gekennzeichnet, dass im Wandbereich (28) des Gehäuses (2) unterhalb des Einfüllschachtes (8) feststehende Messer (12) grösserer Neigung angeordnet sind.

13. Vorrichtung nach einem oder mehreren der Ansprüche 1 bis 12, dadurch gekennzeichnet, dass unten in dem zum Rotor (4) tangentialen Wandbereich des Einfüllschachtes (8) eine nach aussen gegen eine federnde Rückstellkraft öffenbare Sicherungsklappe (34) vorgesehen ist.

14. Vorrichtung nach einem oder mehreren der vorhergehenden Ansprüche, dadurch gekennzeichnet, dass mindestens der mit Messern (11) bestückte Bereich (28) des Gehäuses (2) aus zur Achse (A) des Rotors (4) in senkrechten Ebenen geschichteten Distanzscheiben (20) besteht, und dass die feststehenden Messer (11) zwischen Flächen der Distanzscheiben (20) eingespannt und durch zur Achse parallele, die hinteren Vorsprünge (35) der Messer (11) hintergreifende Sicherungs-Leisten (18) gesichert sind.

15. Vorrichtung nach einem oder mehreren der Ansprüche 1 bis 14, dadurch gekennzeichnet, dass Wandbereiche (16) des Gehäuses (2) ausserhalb des Bereiches der feststehenden Messer (11) eine Fläche in gleichem Abstand zur Rotationsachse (A) mit in geringem Abstand zu einem vom äusseren Durchmesser der Messer (6) des Rotors (4) beschriebenen imaginären Kreis bilden, die mit einem zu diesem Kreis tangentialen Wandteil (14) in den Auswurfschacht (9) übergeht.

16. Verfahren zum Zerkleinern von Pflanzengut, insbesodnere feuchtem Pflanzengut, z.B. zur Erzeugung von Corn Cop Mix, wobei das Pflanzengut zwischen einer Vielzahl sich auf einer Kreisbahn bewegenden inneren Messern und einer Vielzahl äusserer feststehender Messer zerkleinert wird, dadurch gekennzeichnet, dass die bewegten Messer und die feststehenden Messer gemäss Anspruch 1 mit einer Relativgeschwindigkeit zwischen 50 bis 150 m/sec, vorzugsweise zwischen 80 bis 150 m/sec gegeneinabnder bewegt werden.

**Claims**

1. An apparatus for chopping plant material, especially damp plant material, e.g. for producing corn cob mix, comprising a housing (2) and a rotor (4) accommodated rotatably therein and provided with a drive and comprising movable and stationary interacting cutters (6, 11) aligned radially with respect to the rotor shaft (3), the movable cutters (6) being arranged on the outer faces of the rotor (4) and the stationary cutters (11) being arranged on the inner faces of the housing (2), characterized in that the cutters (6, 11) have a thickness of from 0.3 to 3 mm, preferably 0.5 to 1 mm, in that the space between every two movable cutters (6) or stationary cutters (11) in one row (10, 10') corresponds to from twice to approximately four times the thickness of one cutter and in that the movable cutters (6) and the stationary cutters (11) are arranged next to each other in rows (10, 10') axially parallel to the rotor (4) as well as in columns in several rows (10, 10') parallel to each other.

2. An apparatus according to claim 1, characterized in that the movable cutters (6) are inclined backwards in the direction (7) of movement of the rotor (4), their cutting edges (6') forming lines (29) tangential to a circle (30) concentric top the axis of rotation (A).

3. An apparatus according to claim 1 or claim 2, characterized in that the cutting edges (6') of the movable (6) and stationary (11) cutters are arranged in a scissor-form angular position with respect to each other, the angle being between 5° and 30°, and preferably between 7° and 15°.

4. An apparatus according to any one or more of claims 1 to 3, characterized in that the cutters (6, 11) are formed parts made of tempered steel sheet, preferably by stamping.

5. An apparatus according to any one or more of claims 1 to 4, characterized in that the cutters (6, 11) have the form of an elongate rectangle with a preferably rectangular projection (35) at the attachment end (41).

6. An apparatus according to any one or more of claims 1 to 5, characterized in that the form and dimensions of the movable (6) and stationary (11) cutters are the same.

7. An apparatus according to any one or more of claims 1 to 6, characterized in that the body of the rotor (4) comprises spacer disks (20) which are held together between supporting spoked wheels (5) of the rotor (4) and in that the cutters (6) are clamped between the surfaces of the spacer disks (20).

8. An apparatus according to any one or more of claims 1 to 7, characterized in that the cutters (6) are secured in the radial direction by securing strips (18) axially parallel to the shaft (3) and back-gripping the rear projections (35) of the cutters (6).

9. An apparatus according to any one or more of claims 1 to 8, characterized in that the rotor (4) has a diameter of from 50 cm to 150 cm, and preferably of from 80 cm to 120 cm.

10. An apparatus according to any one or more of claims 1 to 9, characterized in that the rotor (4) has a width of from 10 cm to 50 cm, and preferably from 20 cm to 30 cm.

11. An apparatus according to any one or more of claims 1 to 10, characterized in that on the top (2') of the housing (2) there is provided a filler shaft (8), which preferably has a rectangular cross section.

12. An apparatus according to any one or more of claims 1 to 11, characterized in that in the wall area (28) of the housing (2) below the filler shaft (8) stationary cutters (12) are arranged at a greater inclination.

13. An apparatus according to any one or more of claims 1 to 12, characterized in that underneath in the wall area of the filler shaft (8) tangential to the rotor (4) there is provided a safety flap (34) outwardly openable against a spring-loaded restoring force.

14. An apparatus according to any one or more of the preceding claims, characterized in that at least the area (28) of the housing (2) equipped with cutters (11) consists of spacer disks (20) layered in planes perpendicular to the axis (A) of the rotor (4), and in that the stationary cutters (11) are held between surfaces of the spacer disks (20) and secured by securing strips (18) parallel to the axis and back-gripping the rear projections (35) of the cutters (11).

15. An apparatus according to any one or more of claims 1 to 14, characterized in that wall areas (16) of the housing (2) outside the area of the stationary cutters (11) form a surface at the same distance from the axis of rotation (A) and at a short distance from an imaginary circle described by the outer diameter of the cutters (6) of the rotor (4), which surface runs into the ejection shaft (9) with a wall part (14) tangential to this circle.

16. A method of chopping plant material, especially damp plant material, e. g. for producing corn cob mix, the plant material being chopped between a plurality of inner cutters moving on a circular path and a plurality of outer, stationary cutters, characterized in that the movable cutters and the stationary cutters according to claim 1 are moved with respect to each other at a relative speed of between 50 and 150 m/sec. and preferably between 80 and 150 m/sec.

**Revendications**

1. Machine pour le broyage de produits végétaux, en particulier de produits végétaux humides, par exemple pour la production du mélange connu sous la désignation anglaise de «Corn Cob Mix», comprenant un carter (2) et un rotor (4) monté mobile en rotation dans ce carter et muni d'un entraînement, ainsi que de lames mobiles et de lames fixes (6, 11) coopérant entre elles, qui sont orientées radialement, relativement à l'arbre (3) du rotor, les lames mobiles (6) étant disposées sur les surfaces externes du rotor (4) et les lames fixes (11) sur les surfaces internes du carter (2), caractérisée en ce que les lames (6, 11) possèdent une épaisseur de 0,3 à 3 mm, de préférence de 0,5 à 1 mm, l'espace intercalaire entre deux lames mobiles (6) ou entre deux lames fixes (11) d'une même rangée (10, 10') correspondant à une valeur allant du double à environ jusqu'au quadruple de l'épaisseur d'une lame, et les lames mobiles (6) et les lames fixes (11) étant empilées en paquet en formant des rangées (10, 10') parallèles à l'axe du rotor (4), ainsi que des rangées (10, 10') parallèles entre elles.

2. Machine selon la revendication 1, caractérisée en ce que les lames mobiles (6) sont inclinées vers l'arrière, dans le sens du mouvement (7) du rotor (4), leurs arêtes tranchantes (6') formant des lignes (29) qui sont tangentes à un cercle imaginaire (30) centré sur l'axe de rotation (A).

3. Machine selon la revendication 1 ou 2, caractérisée en ce que les arêtes tranchantes (6') des lames mobiles (6) et des lames fixes (11) sont disposées les unes par rapport aux autres dans des dispositions angulaires analogues à celles des branches de paire de ciseaux l'angle variant entre 5° et 30°, de préférence entre 7° et 15°.

4. Machine selon une ou plusieurs des revendications 1 à 3, caractérisée en ce que les lames (6, 11) sont des pièces de forme produites, de préférence par découpage, à partir de tôle d'acier traitée.

5. Machine selon une ou plusieurs des revendications 1 à 4, caractérisée en ce que les lames (6, 11) possèdent la forme d'un rectangle allongé qui est muni d'un talon (35), de préférence rectangulaire, situé à l'extrémité de fixation (41).

6. Machine selon une ou plusieurs des revendications 1 à 5, caractérisée en ce que la forme et les dimensions des lames mobiles (6) et celles des lames fixes (11) sont identiques.

7. Machine selon une ou plusieurs des revendications 1 à 6, caractérisée en ce que le corps du rotor (4) possède des disques entretoises (20) qui sont serrés entre des roues à rayons porteuses (5) du rotor (4) et en ce que les lames (6) sont serrées entre les surfaces des disques entretoises (20).

8. Machine selon une ou plusieurs des revendications 1 à 7, caractérisée en ce que les lames (6) sont bloquées dans la direction radiale par des barres de sécurité (18) parallèles à l'axe de l'arbre (3) et qui accrochent les talons arrière (35) des lames (6).

9. Machine selon une ou plusieurs des revendications 1 à 8, caractérisée en ce que le rotor (4) présente un diamètre de 50 cm à 150 cm, de préférence de 80 cm à 120 cm.

10. Machine selon une ou plusieurs des revendications 1 à 9, caractérisée en ce que le rotor (4) présente une largeur de 10 cm à 50 cm, de préférence, de 20 cm à 30 cm.

11. Machine selon une ou plusieurs des revendications 1 à 10, caractérisée en ce que, sur le côté supérieur (2') du carter (2), est prévue une trémie de chargement (8) qui présente de préférence une section transversale rectangulaire.

12. Machine selon une ou plusieurs des revendications 1 à 11, caractérisée en ce que, dans la région de paroi (28) du carter (2), située au-dessous de la trémie de chargement (8), sont disposées des lames fixes (12) qui présentent une plus forte inclinaison.

13. Machine selon une ou plusieurs des revendications 1 à 12, caractérisée en ce que, en bas, dans la région de la paroi de la trémie de chargement (8) qui est tangentielle au rotor (4), est prévue une trappe de sécurité (34) qui peut s'ouvrir vers l'extérieur en surmontant une force de rappel élastique.

14. Machine selon une ou plusieurs des revendications précédentes, caractérisée en ce qu'au moins la région (28) du carter (2) qui est garnie de lames (11) est constituée par des disques entretoises (20) empilés dans des plans perpendiculaires à l'axe (A) du rotor (4), et en ce que les lames fixes (11) sont serrées entre des surfaces des disques entretoises (20) et sont fixées par des barres du sécurité (18) parallèles à l'axe et qui accrochent des talons arrière (35) des lames (11).

15. Machine selon une ou plusieurs des revendications 1 à 14, caractérisée en ce que à l'extérieur de la région des lames fixes (11), les parties de paroi (16) du carter (2) forment une surface située à la même distance de l'axe de rotation (A), et à petite distance par rapport à un cercle imaginaire qui est décrit par le diamètre extérieur des lames (6) du rotor (4), surface qui se raccorde à la cheminée d'éjection (9) par une partie de paroi (14) tangentielle à ce cercle.

16. Procédé pour broyer un produit végétal, en particulier, un produit végétal humide, par exemple pour la production du mélange connu sous la désignation anglaise de «Corn Cob Mix», dans lequel le produit végétal est broyé entre une pluralité de lames intérieures qui se déplacent sur une trajectoire circulaire et une pluralité de lames extérieures fixes, caractérisé en ce que les lames mobiles et les lames fixes selon la revendication 1 se déplacent les unes par rapport aux autres avec une vitesse relative comprise entre 50 et 150 m/s, de préférence entre 80 et 150 m/s.

0 124 138

Fig. 1

9

Schnitt I-I

A

3

3'

Fig. 2

5

5

20

6

11

20

Fig. 4

0 124 138

Fig. 5

Fig. 3

Fig. 6

Fig. 7

0 124 138

Fig. 8

0 124 138

41

6

b

35

Fig. 9

18   6'   36